# EUROPEAN PATENT APPLICATION

(11) **EP 2 554 432 A1**
(43) Date of publication of application: **06.02.2013**
(21) Application number: 12178978.8
(22) Date of filing: 02.08.2012
(51) Int. Cl.: B60Q 1/00, G01C 9/00

(54) **Sensor mounting structure**

(30) Priority: 03.08.2011 JP 2011170330
(71) Applicant: Koito Manufacturing Co., Ltd., Tokyo 108-8711 (JP)
(72) Inventor: Kasaba, Yusuke, Shizuoka (JP); Ishikawa, Masaaki, Shizuoka (JP); Yamazaki, Masashi, Shizuoka (JP)
(74) Representative: HOFFMANN EITLE

(57) **Abstract**

A sensor mounting structure (100) includes a circuit board (120) configured such that an inclination sensor (110) is mounted on a mounting surface of the circuit board (120) to generate a signal indicative of an inclination angle of a vehicle (300), a connector (122) configured to output the signal, and a casing (130) accommodating the circuit board (120) and adapted to be mounted on the vehicle (300). The casing (130) has an opening (151) through which the connector (122) faces the outside of the casing (130). One of the circuit board (120) and the casing (130) includes a projection (138), and the other of the circuit board (120) and the casing (130) includes a projection receiving portion (124). The projection (138) extends in a direction intersecting the mounting surface of the circuit board (120) and engages with the projection receiving portion (124) such that the circuit board (120) and the casing (130) are positioned relative to each other.

## Description

The present invention relates to a sensor mounting structure and, in particular, relates to a structure for mounting an inclination sensor on a vehicle.

According to a related art, an optical axis orientation of a vehicle headlamp is automatically adjusted in accordance with an inclination angle of the vehicle to change an irradiating direction. This is known as an auto-leveling control. Generally, in an auto-leveling control, vehicle height sensors are used as an inclination sensor for detecting an inclination angle of the vehicle. That is, an optical axis orientation of the headlamp is adjusted in accordance with a pitch angle of the vehicle detected by the vehicle height sensors. Instead of vehicle height sensors, JP2000-085459A discloses an acceleration sensor (a gravity sensor) as an inclination sensor for an auto-leveling control (see also JP2001-341578A and JP2009-126268A). Further, JP2004-314856A disclose a gyro-sensor as an inclination sensor for an auto-leveling control.

By using an acceleration sensor or the like as a vehicle inclination sensor, an auto-leveling system can be provided with lower cost and reduced weight as compared with a system using vehicle height sensors. However, a positioning error in mounting of the sensor on the vehicle is still a problem in that it impairs accuracy of auto-leveling control.

Accordingly, an object of the present invention is to provide a sensor mounting structure by which an inclination sensor is mounted on a vehicle with high position accuracy so as to improve accuracy of auto-leveling control of a vehicle lamp.

According to an illustrative aspect of the present invention, a sensor mounting structure includes a circuit board configured such that an inclination sensor is mounted on a mounting surface of the circuit board to generate a signal indicative of an inclination angle of a vehicle, a connector configured to output the signal, and a casing accommodating the circuit board and adapted to be mounted on the vehicle. The casing has an opening through which the connector faces the outside of the casing. One of the circuit board and the casing includes a projection, and the other of the circuit board and the casing includes a projection receiving portion. The projection extends in a direction intersecting the mounting surface of the circuit board and engages with the projection receiving portion such that the circuit board and the casing are positioned relative to each other.

According to an illustrative aspect of the present invention, a sensor mounting structure includes a circuit board configured such that an inclination sensor is mounted on a mounting surface of the circuit board to generate a signal indicative of an inclination angle of a vehicle, a connector configured to output the signal, and a casing accommodating the circuit board and adapted to be fixed directly to a portion of the vehicle.

Other aspects and advantages of the invention will be apparent from the following description, the drawings and the claims.

Hereinafter, embodiments of the present invention will be described in detail with reference to the drawings.

Fig. 1 is a diagram for explaining a mounting position of an inclination sensor on a vehicle using a sensor mounting structure according to an embodiment of the present invention;

Fig. 2 is a vertical sectional view of a headlamp of the vehicle;

Fig. 3A is an exploded perspective view of a sensor mounting structure according to a first embodiment of the present invention;

Fig. 3B is a plan view of a base portion of a casing of the sensor mounting structure;

Fig. 4A is a plan view illustrating a state in which a circuit board is installed in the casing;

Fig. 4B is a perspective view of the assembled sensor mounting structure;

Fig. 4C is a plan view illustrating a state in which a circuit board is installed in a casing of a modified example of the first embodiment;

Fig. 5 is an exploded perspective view of a sensor mounting structure of a reference example;

Fig. 6 is an exploded perspective view of a sensor mounting structure according to a second embodiment of the present invention; and

Fig. 7 is an exploded perspective view of a sensor mounting structure according to a third embodiment of the present invention.

With regard to the same or similar components or portions illustrated in the drawings, repetitive description thereof will be omitted by giving the same reference signs. The illustrated embodiments are exemplary and do not limit the present invention. The features described in the embodiments and combinations thereof are not necessarily essential for the present invention.

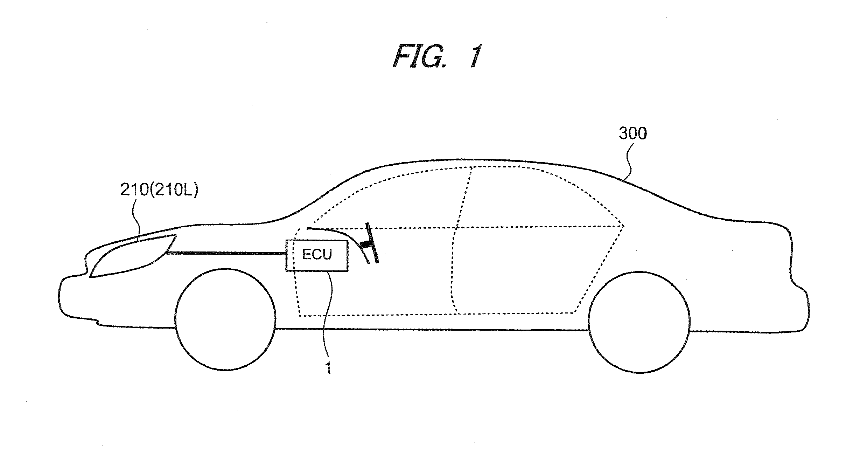

According to an embodiment of the present invention, an inclination sensor is included in a leveling ECU 1 shown in Fig. 1. The leveling ECU 1 is provided, for example, near the dashboard of a vehicle 300. A location of the leveling ECU 1 and a location of the inclination sensor are not limited to the example shown in Fig. 1. For example, they may be provided inside the headlamp 210.

The leveling ECU 1 initiates an auto-leveling control upon receipt of a signal instructing the leveling ECU 1 to execute the auto-leveling control. The signal is sent from, for example, a light switch of the vehicle 300. In the auto-leveling control, the leveling ECU 1 obtains an inclination angle, i.e. a pitch angle, of the vehicle 300 from an output from the inclination sensor. The leveling ECU 1 controls a leveling actuator 226 to adjust a pitch angle of the optical axis 0 of a lamp unit 10 of the headlamp 210 so as to be adapted to the orientation of the vehicle. By executing the auto-leveling control, the leveling adjustment of the lamp unit 10 is carried out in real-time, such that the forward irradiation range by the headlamp 210 is adjusted to an optimum distance in accordance with a change of the vehicle orientation.

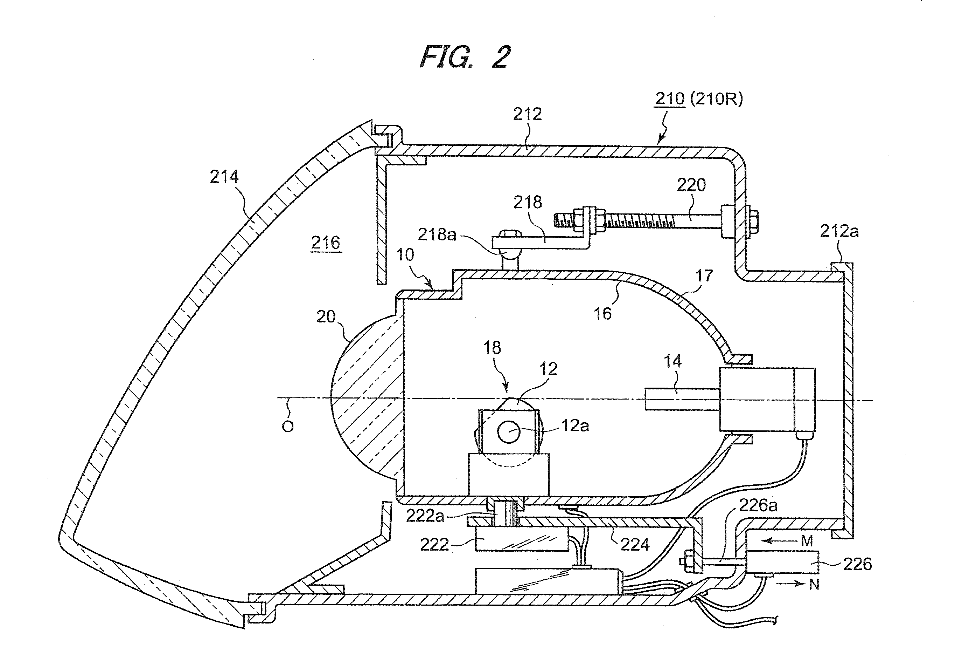

Fig. 2 is a vertical sectional view of an example of the headlamp 210. The headlamp 210 is provided in a pair on right and left portions of the vehicle 300 in a laterally symmetric manner with respect to a widthwise direction of the vehicle 300. The right and left headlamps 210R, 210L have substantially the same structure except that they are laterally symmetric. Therefore, in the following description, a configuration of the right headlamp 210R will be described, and the description of the left headlamp 210L will be omitted.

As shown in Fig. 2, the headlamp 210R includes a lamp body 212 having a front opening and a transparent cover 214 covering the opening. The lamp body 212 includes a removable cover 212a on its rear side. The lamp body 212 and the transparent cover 214 define a lamp chamber 216. A lamp unit 10 is installed inside the lamp chamber 216 to irradiate a region ahead of the vehicle 300.

The lamp unit 10 includes a lamp bracket 218 having a pivot mechanism 218a serving as a rotation center of the lamp unit 10 in vertical and lateral directions. Aiming adjusting screws 220 are supported by the lamp body 212 and are screwed into the lamp bracket 218. A rotation shaft 222a of a swivel actuator 222 is fixed to the lower surface of the lamp unit 10. The swivel actuator 222 is fixed to a unit bracket 224. A leveling actuator 226 is connected to the unit bracket 224 and is disposed outside the lamp body 212. The leveling actuator 226 is a motor or the like, and is configured such that its rod 226a is extended in a direction M and retracted in a direction N.

When the rod 226a is extended in the direction M, the lamp unit 10 takes a rearwardly inclined orientation about the pivot mechanism 218a. When the rod 226a is retracted in the direction N, the lamp unit 10 takes a forwardly inclined orientation about the pivot mechanism 218a. A leveling adjustment is carried out by the forward and backward inclination of the lamp unit 10, whereby the pitch angle of the optical axis O is directed downward or upward. An aiming pivot mechanism is provided at the connecting portion between the rod 226a of the leveling actuator 226 and the unit bracket 224. An aiming adjustment is carried out by turning the aiming adjusting screws 220 to turn the lamp unit 10 vertically and laterally about the aiming pivot mechanism, whereby the aiming of the optical axis O is adjusted vertically and laterally.

The lamp unit 10 includes a shade mechanism 18 having a rotary shade 12, a light source 14, a lamp housing 17 having a reflector 16 on its inner surface, and a projection lens 20. The light source 14 may be, for example, an incandescent lamp, a halogen lamp, a discharge lamp or an LED. At least a portion of the reflector 16 has an ellipsoidal shape. Light from the light course 14 is partially reflected by the reflector 16 and is partially guided above the rotary shade 12 toward the projection lens 20. The rotary shade 12 is a cylindrical member rotatable about a rotation shaft 12a. The rotary shade 12 includes a cutout portion and a plurality shade plates. The cutout portion or one of the shade plates is moved to the optical axis O to form a corresponding light distribution pattern. The projection lens 20 is a plano-convex aspheric lens, and is configured to project a light source image formed on its rear focal plane as an inverted image onto a virtual vertical screen ahead of the lamp. A configuration of the lamp unit 10 is not limited to the configuration described above. For example, the lamp unit 10 may be a reflector-type lamp unit which does not have the projection lens 20.

Next, a sensor mounting structure according to embodiments of the present invention will be described in detail.

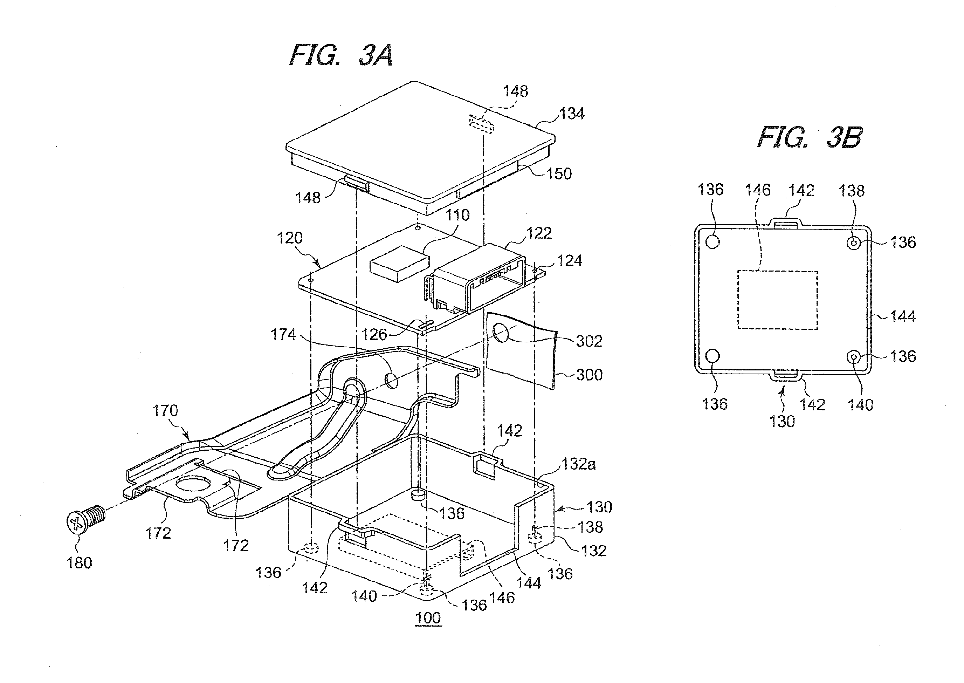

As shown in Figs. 3A and 3B, a sensor mounting structure 100 according to a first embodiment of the present invention includes a casing 130 configured to accommodate a circuit board 120 on which an inclination sensor 110 is mounted, and a mounting member 170, such as a bracket, for mounting the casing 130 at a given position on the vehicle 300. The inclination sensor 110, a CPU, a memory and other devices are mounted on the circuit board 120 to generate a signal indicative of an inclination angle of the vehicle 300. Therefore, the circuit board 120 is configured to serve as the leveling ECU 1. The inclination sensor 110 may be, for example, an acceleration sensor (a gravity sensor), a gyro-sensor (an angular velocity sensor, an angular acceleration sensor), or an earth magnetism sensor. A connector 122 is mounted on the circuit board 120 to outputting the generated signal to the outside. The circuit board 120 includes projection receiving portions 124, 126 adapted to be engaged with projections 138, 140 provided on the casing 130.

The circuit board 120 has a rectangular shape when viewed from above, and the projection receiving portions 124, 126 are formed at two corners on one side of the circuit board 120. The connector 122 is disposed on the side that connects the two corners with the projection receiving portions 124, 126. The projection receiving portion 124 is a round hole. The projection receiving portion 126 is an elongated hole extending toward the projection receiving portion 124. The projection receiving portions 124, 126 can be formed, for example, by routing.

The casing 130 includes a container-like base portion 132 and a cover portion 134 for covering the opening 132a of the base portion 132. The casing 130 has a flat rectangular parallelepiped shape. The casing 130 has a base surface on the bottom wall of the base portion 132, and another base surface on the cover portion 134. The circuit board 120 is installed in the base portion 132 from the opening 132a. The circuit board 120 is installed such that the inner surface of the bottom wall of the base portion 132 faces a base surface (a lower surface) of the circuit board 120.

Seats 136 are arranged at given positions on the inner surface of the bottom wall of the base portion 132 such that the base surface of the circuit board 120 contacts the seats 136. The seats 136 are provided, for example, apiece at the four corners of the inner surface of the bottom wall of the base portion 132. Two of the seats 136 are provided with the projections 138, 140 that engage with the projection receiving portions 124, 126 of the circuit board 120, respectively. The projections 138, 140 are pins projecting in a direction intersecting the inner surface of the bottom wall of the base portion 132.

The two opposed side walls of the four side walls of the base portion 132 include snap-engaging hooks 142 each having a rectangular opening. One of the side walls intersecting the side walls with the hooks 142 is formed with a cutout portion 144 corresponding in shape to the connector 122. The base portion 132 includes a rail guide 146 on an outer surface of the bottom wall of the base portion 132. The rail guide 146 engages with the slide rails 172 of the mounting member 170.

Two opposed side walls of the four side walls of the cover portion 134 includes rectangular projecting portions 148 for snap engagement. One of the side walls intersecting the two side walls with the rectangular projecting portions 148 is formed with a protruded portion 150 engaging with the cutout portion 144.

The mounting member 170 is a substantially flat plate-like member and includes the slide rails 172 on one end portion thereof. The other end portion of the mounting member 170 is bent substantially at right angles to the surface with the slide rails 172 and includes a penetration hole 174 at a given position.

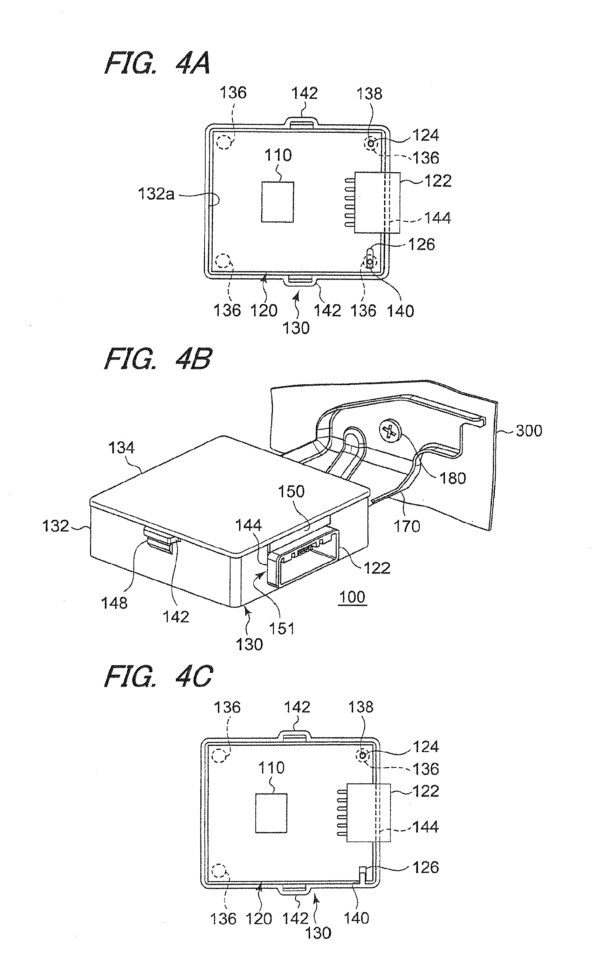

According to the sensor mounting structure 100 described above, the circuit board 120 and the casing 130 are positioned relative to each other by engaging the projections 138, 140 of the casing 130 with the projection receiving portions 124, 126 of the circuit board 120 in a direction intersecting the surface (the mounting surface) of the circuit board 120). Specifically, as shown in Fig. 4A, when the circuit board 120 is inserted into the base portion 132 through the opening 132a, the projection 138 is inserted into the round-hole projection receiving portion 124 in a direction intersecting the surface of the board 120. Thus, the circuit board 120 is positioned relative to the casing 130 in the front-rear and right-left directions (directions parallel to the surface of the board 120). Simultaneously, the projection 140 is inserted into the elongated-hole projection receiving portion 126 in a direction intersecting the surface of the board 120. This restricts the relative rotation of the circuit board 120 and the casing 130 about the projection 138. The elongated hole of the projection receiving portion 126 allows a deviation of the distance between the projections 138, 140 from its design value. The projections 138, 140 are inserted into the projection receiving portions 124, 126 until the base surface of the circuit board 120 touches the receiving surfaces of the seats 136. The connector 122 is fitted into the cutout portion 144 of the base portion 132.

After accommodating the circuit board 120 is in the base portion 132, as shown in Fig. 4B, the cover portion 134 is fitted to the opening 132a. The base portion 132 and the cover portion 134 are fixed by snap engagement between the hooks 142 and the rectangular projecting portions 148. The protruded portion 150 is fitted to the cutout portion 144. The lower end of the protruded portion 150 contacts the upper surface of the connector 122. The cutout portion 144 and the protruded portion 150 define an opening 151 allowing the connector 122 to face the outside of the casing 130. The connector 122 is exposed to the outside of the casing 130 from the opening 151. For example, a harness is connected to the connector 122 to connect the circuit board 120 to an external device. The casing 130 may be configured to receive a harness connected to the connector 122 from outside.

The movement of the circuit board 120 in the insertion direction (the vertical direction) may be restricted by the engagement of the projection 138 with the projection receiving portion 124. Alternatively, the vertical movement of the circuit board 120 may be restricted by providing seats on the cover portion 134 and holding the circuit board 120 between the seats 136 on the base portion 132 and the seats on the cover portion 134.

The casing 130 is secured to the mounting member 170 by engaging the rail guide 146 with the slide rails 172. The mounting member 170 is fixed to the vehicle 300 by aligning the penetration hole 174 and the connecting hole 302 of the vehicle 300 and inserting a fastener 180, such as a screw, into the penetration hole 174 and the connecting hole 302.

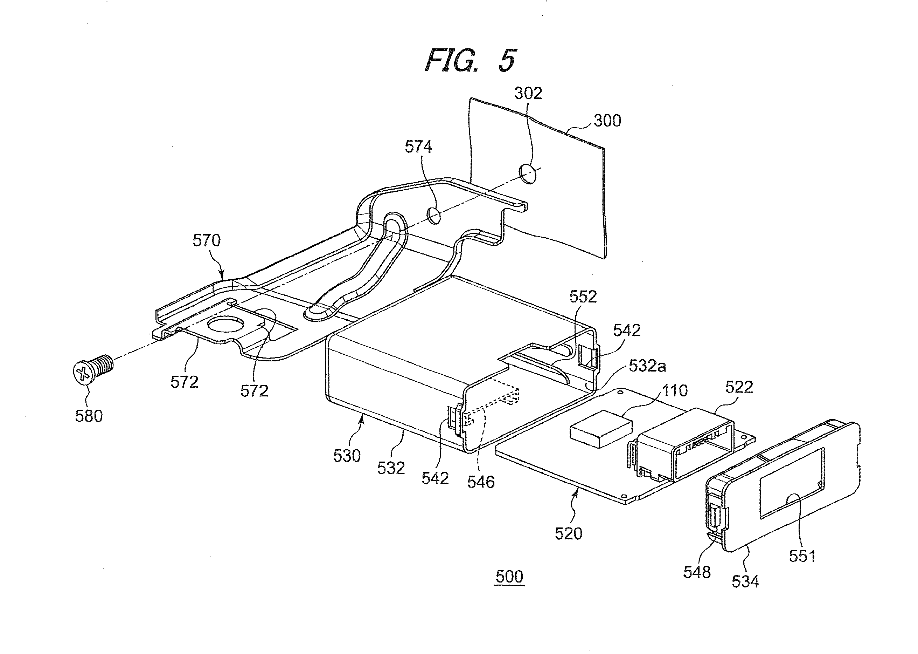

Here, a sensor mounting structure 500 according to a reference example will be described. As shown in Fig. 5, the sensor mounting structure 500 includes a casing 530 for accommodating a circuit board 520 and a mounting member 570 for mounting the casing 530 onto the vehicle 300.

The circuit board 520 is similar to the circuit board 120 of the sensor mounting structure 100 of the first embodiment, except that it does not include the projection receiving portions 124, 126. The casing 530 includes a container-like base portion 532 and a cover portion 534 for covering the opening 532a of the base portion 532. The casing 530 has a flat rectangular parallelepiped shape. The cover portion 534 forms one of the side walls of the casing 530.

The base portion 532 includes, on the inner surfaces of its two opposed side walls extending in a direction intersecting the plane of the opening 532a, board guides 552 extending parallel to the base surface of the casing 530. The two side walls with the board guides 552 include, on a side of the opening 532a, hooks 542 for snap engagement. The base portion 532 includes a rail guide 546 provided on its outer surface and engaging with the slide rails 572 of the mounting member 570. The cover portion 534 includes, on its side walls corresponding to the side walls of the base portion 532 with the hooks 542, rectangular projecting portions 548 for snap engagement. The cover portion 534 also includes an opening 551 for receiving a connector 522.

The circuit board 520 is inserted into the base portion 532 through the opening 532a and along the board guides 552, from the side opposite to the connector 552. The circuit board 520 and the casing 530 are positioned relative to each other by engaging the two opposed sides of the circuit board 520 with the board guides 552 in a direction parallel to the surface of the board 520. After accommodating the circuit board 520 into the base portion 532, the cover portion 534 is fitted into the opening 532a. The base portion 532 and the cover portion 534 are fixed by the snap engagement between the hooks 542 and the rectangular projecting portions 548. At the same time, the connector 522 is fitted into the opening 551.

The casing 530 is secured to the mounting member 570 by engaging the rail guide 546 with the slide rails 572. The mounting member 570 is secured to the vehicle 300 by aligning the penetration hole 574 and the connecting hole 302 of the vehicle 300 and inserting a fastener 580, such as a screw, into the penetration hole 574 and the connecting hole 302.

According to the sensor mounting structure 500 of the reference example, the side portions of the circuit board 520 are held between the board guides 552 to position the casing 530 and the circuit board 520. That is, according to the sensor mounting structure 500, the circuit board 520 is supported in a line contacting manner. In contrast, according to the sensor mounting structure 100, the casing 130 and circuit board 120 are positioned by fitting the projections 138, 140 into the projection receiving portions 124, 126 of the circuit board 120. That is, according to the sensor mounting structure 100, the circuit board 120 is supported at points. Therefore, higher accuracy can be obtained for the dimension accuracy between the projection 138 and the projection receiving portion 124 than the dimension accuracy between the circuit board 520 and the board guides 552. Thus, according to the sensor mounting structure 100, as compared with the sensor mounting structure 500 of the reference example, positional shift (play) of the circuit board 120 due to vibrations of the vehicle or the like can be suppressed.

In the embodiment described above, the projections 138, 140 are provided on the casing 130 and the projection receiving portions 124, 126 are provided in the circuit board 120. However, alternatively, the projection receiving portions 124, 126 may be provided in the casing 130 and the projections 138, 140 may be provided on the circuit board 120.

As described above, in the sensor mounting structure 100, the circuit board 120 and the casing 130 are positioned relative to each other by engaging the projections 138, 140 provided on one of the circuit board 120 and the casing 130 with the projection receiving portions 124, 126 provided in the other of the circuit board 120 and the casing 130 in a direction intersecting the surface of the board 120. Accordingly, the inclination sensor 110 is positioned with respect to the vehicle with high accuracy, so that accuracy of the auto-leveling control of the vehicle lamp is improved.

Fig. 4C illustrates a modified example of the sensor mounting structure 100. As shown in Fig. 4C, according to this modified example, the projection 140 extends from the side wall of the casing 130 in a direction parallel to the inner surface of the bottom wall of the casing 130, and the projection receiving portion 126 of the circuit board 120 is formed in a recessed manner by cutting out a portion of the peripheral edge portion of the circuit board 120. The pin-shaped projection 138 is inserted into a round-hole projection receiving portion 124 in a direction intersecting the surface of the board 120, whereby the circuit board 120 is positioned relative to the casing 130 in the front-rear and right-left directions (direction parallel to the surface of the board 120). Simultaneously, the projection 140 is engages with the projection receiving portion 126 in a direction intersecting the surface of the board 120, whereby the relative rotation of the circuit board 120 and the casing 130 about the projection 138 is restricted. The cutout depth of the projection receiving portion 126 is larger than the projecting length of the projection 140, allowing a deviation of the distance between the projections 138, 140 from the design value.

According to a second embodiment of the present invention, a sensor mounting structure 100 with no mounting member is provided. That is, a casing 130 is fixed directly to a vehicle. The second embodiment will be described below. Here, components similar to or corresponding to those of the first embodiment are given the same reference signs, and description of common features thereof will be omitted.

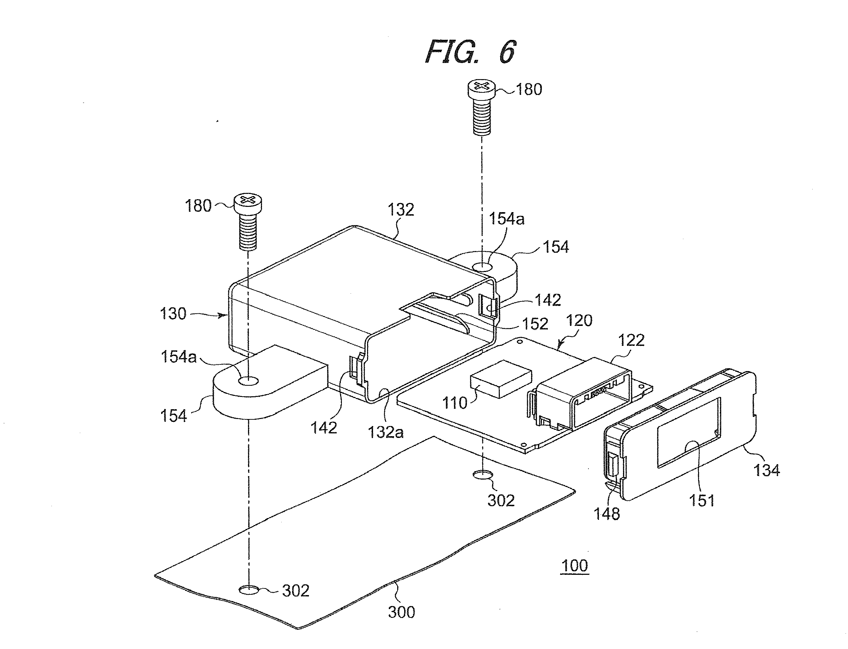

As shown in Fig. 6, the sensor mounting structure 100 according to the second embodiment includes a circuit board 120 on which an inclination sensor 110 is mounted, and a casing 130 accommodating the circuit board 120. The casing 130 includes a container-like base portion 132 and a cover portion 134 for covering the opening 132a of the base portion 134. The casing 130 has a flat rectangular parallelepiped shape. The base portion 132 has a container-like shape and has the opening 132a on a lateral side. The cover portion 134 forms one of the side walls of the casing 130.

The base portion 132 includes, on the inner surfaces of its two opposed side walls extending in a direction intersecting the plane of the opening 132a, board guides 152 extending parallel to the base surface of the casing 130. The two side walls with the board guides 152 include, on a side of the opening 132a side, hooks 142 for snap engagement. The base portion 132 includes, on the outer surfaces of the two side walls with the board guides 152, fixing wing portions 154 respectively projecting from the side walls. Each of the fixing wing portion 154 has a penetration hole 154a.

The cover portion 134 includes, on its side walls corresponding to the side walls of the base portion 132 with the hooks 142, rectangular projecting portions 148 for snap engagement. The cover portion 134 has an opening 151 from which the connector 122 is exposed to the outside of the casing 130.

According to the sensor mounting structure 100 of this embodiment, the casing 130 is fixed directly to the given portion of the vehicle 300. Specifically, the circuit board 120 is inserted into the base portion 132 through the opening 132a and along the board guides 152, from the side opposite to the connector 122. The circuit board 120 and the casing 130 are positioned relative to each other by engaging the two opposed sides of the circuit board 120 with the board guides 152 in a direction parallel to the surface of the board 120. After accommodating the circuit board 120 in the base portion 132, the cover portion 134 is fitted into the opening 132a. The base portion 132 and the cover portion 134 are fixed by snap engagement between the hooks 142 and rectangular projecting portions 148. The connector 122 is fitted into the opening 151.

The casing 130 is secured to the vehicle 300 by aligning the penetration holes 154a of the fixing wing portions 154 and the connecting holes 302 of the vehicle 300 and inserting fasteners 180, such as screws, into the penetration holes 154a and the connecting holes 302.

In the reference example, the inclination sensor 110 is fixed to the vehicle 300 via the circuit board 520, the casing 530 and the mounting member 570. Therefore, the position accuracy of the inclination sensor 110 relative to the vehicle 300 is influenced by the mounting tolerance of the inclination sensor 110 with respect to the circuit board 520, the mounting tolerance of the circuit board 520 with respect to the casing 530, the mounting tolerance of the casing 530 with respect to the mounting member 570 and the mounting tolerance of the mounting member 570 with respect to the vehicle 300. In contrast, according to the sensor mounting structure 100 of this embodiment, the casing 130 is fixed directly to the vehicle 300. That is, the casing 130 itself has the function of the mounting member, so that the mounting member is omitted. This can reduce a mounting tolerance that may deteriorate the position accuracy of the inclination sensor 110. Thus, the circuit board 120 can be positioned relative to the vehicle 300 with higher accuracy.

As described above, according to the sensor mounting structure 100 of this embodiment, the casing 130 includes the opening 151 allowing the connector 122 to be exposed to the outside of the casing 130 and is also fixed directly to the given position on the vehicle 300. Therefore, the inclination sensor 110 can be positioned relative to the vehicle 300 with high accuracy, thereby improving accuracy of the auto-leveling control of the vehicle lamp.

According to a third embodiment of the present invention, a sensor mounting structure 100 is configured such that a circuit board 120 and a casing 130 are positioned by engaging projections 13 8, 140 into projection receiving portions 124, 126 and fixing the casing 130 directly to the vehicle 300, not using a mounting member. The third embodiment will be described below. Here, components similar to or corresponding to those of the first and/or second embodiments are given the same reference signs, and description of common features thereof will be omitted.

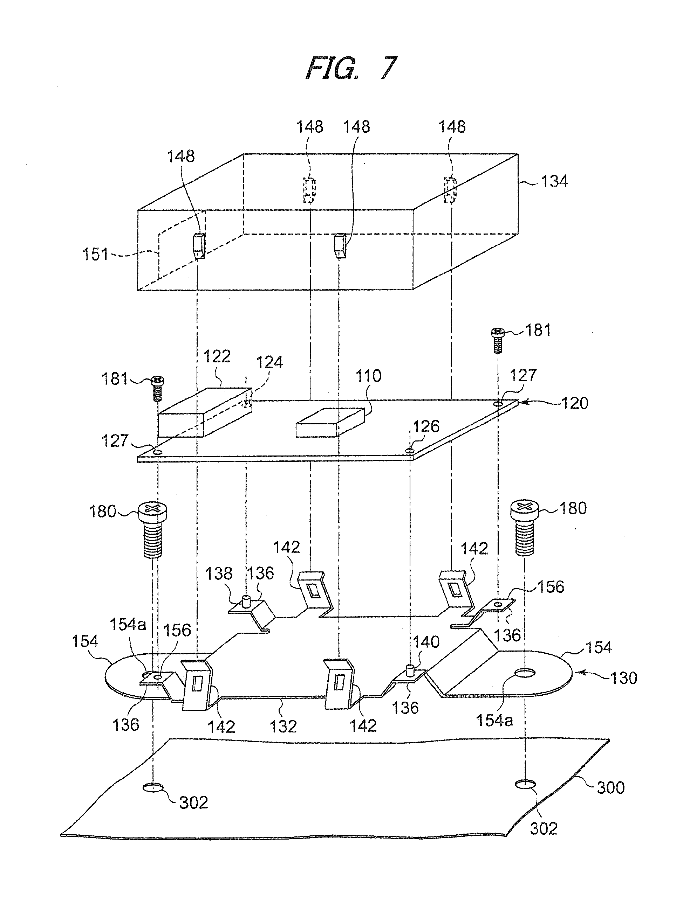

As shown in Fig. 7, the sensor mounting structure 100 according to the third embodiment includes the circuit board 120 on which the inclination sensor 110 is mounted, and the casing 130 accommodating the circuit board 120. The circuit board 120 has a rectangular shape when viewed from above, and includes projection receiving portions 124, 126 at two diagonal corners. The projection receiving portions 124, 126 are round holes. The remaining two corners include penetration holes 127.

The casing 130 includes a substantially flat-plate-like base portion 132 having a rectangular shape when viewed from above, and a cover portion 134 covering the base portion 132. The base portion 132 includes seats 136 configured to contact the base surface of the circuit board 120. In this embodiment, the seats 136 are provided apiece at four corners of the base portion 132. Two of the seats 136 at the diagonal corners include projections 138, 140 engaging with the projection receiving portions 124, 126 of the circuit board 120. The projections 138, 140 are pins projecting in a direction intersecting the direction in which the base portion 132 extends. The two remaining seats 136 include penetration holes 156.

The two opposed sides of the base portion 132 include snap-engaging hooks 142, each having a rectangular opening. In this embodiment, two hooks 142 are provided on each side. The other two opposed sides include fixing wing portions 154. Each of the fixing wing portion 154 includes a penetration hole 154a. The base portion 132 including the seats 136, the hooks 142 and the fixing wing portions 154 may be formed in a one-piece structure by, for example, press working a sheet of metal plate.

The cover portion 134 includes, on the two opposed side walls thereof, rectangular projecting portions 148 for snap engagement. The cover portion 134 includes an opening 151 for exposing the connector 122 to the outside of the casing 130.

According to the sensor mounting structure 100 of this embodiment, the circuit board 120 and the casing 130 are positioned relative to each other by engaging the projections 138, 140 of the casing 130 into the projection receiving portions 124, 126 of the circuit board 120 in a direction intersecting the surface of the board 120. Further, the casing 130 is fixed directly to a given position on the vehicle 300.

Specifically, the circuit board 120 and casing 130 are arranged such that the projection receiving portions 124, 126 and the projections 138, 140 are aligned when viewed from a direction intersecting the surface of the board 120. Then, the projections 138, 140 are inserted into the round-hole projection receiving portions 124, 126 in the direction intersecting the surface of the board 120, whereby the circuit board 120 is positioned relative to the casing 130. The projections 138, 140 are inserted into the round-hole projection receiving portions 124, 126 until the base surface of the circuit board 120 contacts the receiving surfaces of the seats 136. In a state where the projections 138, 140 are inserted in the projection receiving portions 124, 126, the penetration holes 127 of the circuit board 120 and the penetration holes 156 of the base portion 132 are aligned. Fasteners 181, such as screws, are inserted into the penetration holes 127, 156, whereby the circuit board 120 is fixed to the base portion 132.

After fixing the circuit board 120 to the base portion 132, the cover portion 134 is fitted to the base portion 132. The base portion 132 and the cover portion 134 are fixed together by the snap engagement between the hooks 142 and the rectangular projecting portions 148. The connector 122 is engaged into the opening 151 of the cover portion 134.

The casing 130 is secured to the vehicle 300 by aligning the penetration holes 154a of the fixing wing portions 154 and the connecting holes 302 of the vehicle 300 and inserting the fasteners 180, such as screws, into the penetration holes 154a and the connecting holes 302.

According to the sensor mounting structure 100 of this embodiment, the circuit board 120 is supported at points. Thus, as compared with the sensor mounting structure 500 of the reference example, the positional shift (play) of the circuit board 120 can be suppressed. Also, it is possible to reduce a mounting tolerance that may deteriorate the position accuracy of the inclination sensor 110. Therefore, the inclination sensor 110 can be positioned relative to the vehicle with high accuracy.

As described above, according to the sensor mounting structure 100 of this embodiment, the circuit board 120 and the casing 130 are positioned relative to each other by engaging the projections 138, 140 provided on one of the circuit board 120 and the casing 130 with the projection receiving portions 124, 126 provided in the other of the circuit board 120 and the casing 130 in a direction intersecting the surface of the board 120. Further, the casing 130 is fixed directly to a given position on the vehicle 300. Therefore, the inclination sensor 110 positioned relative to the vehicle 300 with high accuracy, whereby the accuracy of the auto-leveling control of the vehicle lamp is improved.

While the present invention has been described with reference to certain embodiments thereof, the scope of the present invention is not limited to the embodiments described above, and it will be understood by those skilled in the art that various changes and modifications may be made therein without departing from the scope of the present invention as defined by the appended claims.

## Claims

1. A sensor (110) mounting structure (100) comprising:
a circuit board (120) configured such that an inclination sensor (110) is mounted on a mounting surface of the circuit board (120) to generate a signal indicative of an inclination angle of a vehicle (300);
a connector (122) configured to output the signal; and
a casing (130) accommodating the circuit board (120) and adapted to be mounted on the vehicle (300),
wherein the casing (130) has an opening (151) through which the connector (122) faces the outside of the casing (130),
wherein one of the circuit board (120) and the casing (130) comprises a first projection (138), and the other of the circuit board (120) and the casing (130) comprises a first projection receiving portion (124), and
wherein the first projection (138) extends in a direction intersecting the mounting surface of the circuit board (120) and engages with the first projection receiving portion (124) such that the circuit board (120) and the casing (130) are positioned relative to each other.

2. The sensor (110) mounting structure (100) according to claim 1, wherein the first projection (138) is a pin and the first projection receiving portion (124) is a round hole.

3. The sensor (110) mounting structure (100) according to claim 1 or 2, wherein one of the circuit board (120) and the casing (130) comprises a second projection (140), and the other of the circuit board (120) and the casing (130) comprises a second projection receiving portion (126),
wherein the second projection (140) engages with the second projection receiving portion (126) such that a rotation of the circuit board (120) relative to the casing (130) and about the first projection (138) is restricted.

4. The sensor (110) mounting structure (100) according to claim 3, wherein the second projection receiving portion (126) is elongated in a direction toward the first projection receiving portion (124).

5. The sensor (110) mounting structure (100) according to any one of claims 1 to 4, further comprising a mounting member (170) via which the casing (130) is mounted on a portion of the vehicle (300).

6. The sensor (110) mounting structure (100) according to any one of claims 1 to 4, wherein the casing (130) is adapted to be fixed directly to a portion of the vehicle (300).

7. The sensor (110) mounting structure (100) according to claim 6, wherein the casing (130) comprises a pair of laterally extending wing portions (154) adapted to be fixed directly to the portion of the vehicle (300).
